(19) Europäisches Patentamt / European Patent Office / Office européen des brevets

(11) **EP 2 613 869 B1**

(12) **EUROPEAN PATENT SPECIFICATION**

(45) Date of publication and mention
of the grant of the patent:
**05.11.2014 Bulletin 2014/45**

(21) Application number: **11743077.7**

(22) Date of filing: **12.08.2011**

(51) Int Cl.:
*B01D 63/10* (2006.01)  *B01D 63/14* (2006.01)
*B01D 69/02* (2006.01)  *B01D 71/34* (2006.01)
*B01D 71/68* (2006.01)  *B01D 67/00* (2006.01)
*B01D 69/14* (2006.01)  *C02F 1/44* (2006.01)
*C02F 1/50* (2006.01)  *A61L 2/238* (2006.01)

(86) International application number:
**PCT/EP2011/063939**

(87) International publication number:
**WO 2012/031853 (15.03.2012 Gazette 2012/11)**

(54) **AN ANTIMICROBIAL MEMBRANE**

ANTIMIKROBIELLE MEMBRAN

MEMBRANE ANTIMICROBIENNE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.10.2010 EP 10188448**
**08.09.2010 IN MU24832010**

(43) Date of publication of application:
**17.07.2013 Bulletin 2013/29**

(73) Proprietors:
• **Unilever N.V.**
**3013 AL Rotterdam (NL)**
Designated Contracting States:
**AL AT BE BG CH CZ DE DK EE ES FI FR GR HR HU IS IT LI LT LU LV MC MK NL NO PL PT RO RS SE SI SK SM TR**
• **Unilever PLC**
**London EC4Y 0DY (GB)**
Designated Contracting States:
**CY GB IE MT**

(72) Inventors:
• **MAHAPATRA, Samiran**
**Bangalore 560 066 (IN)**
• **SAMADDER, Satyajit**
**Bangalore 560 066 (IN)**

(74) Representative: **Rosen Jacobson, Frans Lucas M.**
**Unilever Patent Group**
**Olivier van Noortlaan 120**
**3133 AT Vlaardingen (NL)**

(56) References cited:
**WO-A1-98/18330**   **JP-A- 2006 348 966**
**US-A- 5 102 547**   **US-B1- 6 716 895**

• HU W ET AL: "In situ synthesis of silver chloride nanoparticles into bacterial cellulose membranes", MATERIALS SCIENCE AND ENGINEERING C, ELSEVIER SCIENCE S.A, CH, vol. 29, no. 4, 5 May 2009 (2009-05-05), pages 1216-1219, XP026018972, ISSN: 0928-4931, DOI: DOI:10.1016/J.MSEC.2008.09.017 [retrieved on 2008-09-18]

**Description**

**Technical field**

The present invention relates to an antimicrobial membrane. More particularly the present invention relates to an antimicrobial membrane having ultrafiltration properties useful for purification of drinking water under gravity by removing harmful microorganism that exists in an input water source.

The invention has been developed primarily for use in drinking water application and will be described hereinafter with reference to this application. However, it will be appreciated that the invention is not limited to this particular field of use.

**Background and prior art**

Any discussion of the prior art throughout the specification should in no way be considered as an admission that such prior art is widely known or forms part of the common general knowledge in the field.

There are many impurities that have been identified in water, which have to be removed in order to make it safe for human consumption. Such impurities include particulate water insoluble solids, dissolved salts and organic compounds like industrial chemicals, pesticides and its residues and harmful microorganisms like cysts, protozoa, bacteria and virus.

There are several methods of water purification such as boiling, filtration which removes coarse suspended solids by using sand beds, flocculation and coagulation to precipitate out finer suspended impurities, ion-exchange to soften the water and use of biocides e.g. halogens like iodine and chlorine to kill the microorganisms. Many people do not purify the water and thus fall prey to many diseases.

One of the methods used for the purpose of effective removal of suspended particles as well as microorganisms such as bacteria, viruses and cysts from water is using ultrafiltration (UF) membrane. This ultrafiltration membrane is capable of effective removal of microorganisms from water. Gravity based ultrafiltration systems are also known. These systems use ultrafiltration membranes for purification of water for domestic purposes but the rate of filtration is relatively low. The other problem is that current systems do not remove viruses effectively. Large scale industrial systems based on ultrafiltration are also known. These systems are too complex to be operated by a consumer for domestic purpose and also these are relatively expensive. So there is a need for a method and apparatus for removing microorganisms including bacteria, viruses and cysts that is convenient to use with an efficient rate of filtration.

Fouling of ultrafiltration membranes is one of the key issues associated with using this technology for water purification. Fouling results in reduced flow of water through the membrane. Fouling of an ultrafiltration membrane is primarily due to suspended particles and dissolved organic matter. If the prefilter is not very efficient in removing suspended particles there will be fouling at the ultrafiltration membrane and thus the number of interventions will be high.

WO9818330 (Surfacine Consumer Products), discloses an antimicrobial material which can be used to coat a surface and the antimicrobial material is capable of killing microorganisms on contact. The method used for deposition of antimicrobial material is by a cross linking polymerisation technique. There is no disclosure about an ultrafiltration membrane, formed by a simple in-situ precipitation method. The membrane disclosed in WO9818330 is capable of only contact kill and is not suitable for use as ultrafiltration membranes for use in water purifiers to provide 6 log reduction in bacteria, 4 log reduction in viruses and 3 log reduction in cysts.

JP2006 348966 (Toray Industries) discloses a water purification system capable of suppressing the propagation of bacteria by providing an antibacterial agent in a tube and the material of construction of the tube is a polymeric material. This does not disclose an antimicrobial membrane having ultrafiltration properties for water purification.

US5102547 (Waite Warren A), discloses a semi permeable membrane system for micro or ultra filtration utilizing an oligodynamic biostatic, biocidal materials along with silver or silver alloys dispersed in the membranes. The problem associated with such a membrane is that the life time of this membrane is less due to high release of silver particle which is not desirable. The present inventors have found that the membranes according to the present invention are suitable as ultrafiltration membranes and are capable of providing 6 log reduction in bacteria, 4 log reduction in viruses and 3 log reduction in cysts and have a longer life time.

Uses of silver based particle are also known for water purification for killing microorganisms. WO 2009/047154 (POLYMERS CRC LIMITED, 2009) discloses the preparation of an antimicrobial membrane which releases silver particle selected from the group of silver glass, silver zeolite in combination with zinc, and elemental silver of high surface area. This membrane may be made as a composite type by casting a dope solution of a polysulfone and antimicrobial agents such as silver glass, silver zeolite in combination with zinc onto a reinforcing fabric. The problem associated with WO2009/047154 is that the life time of this membrane is less due to hight release fo silver particle, which is not desirable.

US 6 716 895 B1 (Terry, Richard N.) discloses substrates (e.g. medical devices etc.) coated with a polymer coating comprising a colloid. wherein the colloid comprises oligodynamic metal compounds.

Hu, W. et al. ["In situ synthesis of silver chloride nanoparticles into bacterial cellulosemembranes", MATERIALS SCIENCE AND ENGINEERING C, vol. 29, no. 4, (2009-05-05), pp 1216-12191 discloses the formation of AgCl nanoparticles inside a pre-fabricated bacterial cellulose membrane, entailing consecutive soaking of the membrane in aqueous AgNO$_3$ and NaCl solutions.

The present inventors have found that it has now been possible by way of present invention to develop a novel antimicrobial membrane having ultrafiltration properties for water purification which requires lesser number of interventions and has higher lifetime, without producing any byproduct and yet is capable of delivering microbiologically safe water. The inventors also found that it has also been possible to prepare such antimicrobial membranes having ultra filtration properties by a simple in situ precipitation technique with simultaneous phase separation.

## Objects of the invention

One of the objects of the present invention is to overcome or ameliorate at least one of the disadvantages of the prior art, or to provide a useful alternative.

Another object of the present invention is to provide an antimicrobial membrane with relatively high life time.

It is yet another object of the present invention to provide a process for making an antimicrobial membrane with higher life time.

It is a further object of the invention to provide a water purification process without producing any byproduct.

It is yet a further object of the present invention to provide pure water which is substantially free from bacteria, viruses and cysts.

Surprisingly it has now been found that, a fabric filter impregnated with a thermoplastic polymer and silver halide capable of forming a antimicrobial membrane having ultrafiltration property that has long lasting life, requiring lesser number of interventions and without producing any byproduct and yet is capable of delivering microbiologically safe water.

## Summary of the invention

According to one aspect of the present invention there is provided an antimicrobial membrane having ultrafiltration properties comprising a fabric material integrally skinned with a composite comprising thermoplastic polymer and silver halide.

In another aspect the present invention provides a process for making a process for making an antimicrobial membrane having ultrafiltration properties comprising the steps of:

> a) preparing a solution of a silver salt in a suitable water miscible solvent having a water content less than 1 %,
> b) adding a thermoplastic polymer to the solution of step (a),
> c) coating the solution obtained after step (b) onto a fabric selected from cotton, polyester, polypropylene, polycotton, nylon or any other non-woven, woven or knitted fabric, and
> d) exposing the polymer coated fabric to an aqueous solution of an alkali halide or alkaline earth metal halide.

These and other aspects, features and advantages will become apparent to those of ordinary skill in the art from a reading of the following detailed description and the appended claims. For the avoidance of doubt, any feature of one aspect of the present invention may be utilised in any other aspect of the invention. The word "comprising" is intended to mean "including" but not necessarily "consisting of" or "composed of". It is noted that the examples given in the description below are intended to clarify the invention and are not intended to limit the invention to those examples per se. Similarly, all percentages are weight/weight percentages unless otherwise indicated. Except in the operating and comparative examples, or where otherwise explicitly indicated, all numbers in this description and claims indicating amounts of material or conditions of reaction, physical properties of materials and/or use are to be understood as modified by the word "about". Numerical ranges expressed in the format "from x to y" are understood to include x and y. When for a specific feature multiple preferred ranges are described in the format "from x to y", it is understood that all ranges combining the different endpoints are also contemplated.

## Detailed description of the invention

Thus the present invention provides an antimicrobial membrane having ultrafiltration properties comprising a fabric material integrally skinned with a composite comprising thermoplastic polymer and silver halide.

The fabric material is selected from woven, knitted or non-woven fabric. The fabric may be made of natural fibers or material or may be of synthetic origin. Preferred fabric is non-woven. Preferred material of the fabric is synthetic preferably polymeric. Suitable polymeric materials of construction of the fabric are cotton, polyester, polypropylene, polycotton or nylon.

For the purpose of the present invention the silver halide is selected from silver bromide, silver fluoride, silver chloride and silver iodide, preferably silver brom ide.

According to one of the preferred embodiments the present invention provides a filter comprising an antimicrobial membrane in the form of a spirally wound layer of non-pleated fabric enveloped with spirally wound layer of pleated fabric, in a housing having an inlet and an outlet.

The average pore size of the non-pleated fabric is preferably in the range of 1 to 400 micrometers, more preferably in the range of 10 to 300 microns, most preferably in the range of 25 to 200 microns. The fabric forming the non-pleated layers has a thickness preferably in the range of 1 to 10 mm, more preferably in the range of 2 to 6 mm. The number of spiral windings of non-pleated layers is preferably in the range of 1 to 10, more preferably in the range of 1 to 7. The total thickness of the spirally wound layers of non-pleated fabric is preferably from 1 to 30 mm more preferably 2 to 20 mm. The total surface area of non-pleated layer is preferably from 100 to 2500 cm$^2$ more preferably from 200 to 1500 cm$^2$.

The non-pleated fabric has zeta potential preferably greater than -40 mV, more preferably greater than -30 mV. Zeta Potential is the electrical potential that exists at the "shear plane" of a particle, which is some small distance from its surface. Zeta Potential is derived from measuring the mobility distribution of a dispersion of charged particles as they are subjected to an electric field. Mobility is defined as the velocity of a particle per electric field unit and is measured by applying an electric field to the dispersion of particles and measuring their average velocity.

The non-pleated fabric has specific liquid permeability preferably less than 2 x 10$^{-11}$ m$^2$, more preferably less than 1.75 x 10$^{-11}$ m$^2$. The permeability is defined as the volumetric flow rate of liquid passed through a unit surface area of fabric per unit time at a constant unit differential pressure of water. The intrinsic permeability, also called the specific permeability or absolute permeability of a fabric is a characteristic feature of the fabric structure and represents the void capacity through which a fluid can flow. The specific liquid permeability k is defined by Darcy's law as:

$$q = -\frac{k}{\mu}\frac{dp}{dx}$$

Where q = volumetric flow rate of the fluid in a unit flow area (m/s), k is the specific permeability (m2), dp is the difference in hydraulic pressure (Pa), dx is the fabric thickness (m), $\mu$ is the liquid viscosity (Pa.s)

The non-pleated fabric has surface porosity preferably less than 20%, more preferably less than 15% and most preferably less than 12%. Surface porosity is defined as the ratio of voids in the plane cross section of the porous medium to the total area of cross section.

Without wishing to be limited by theory it is believed that fabrics of spirally wound layers of pleated fabric having surface porosity and liquid permeability values in the preferred range provide relatively better cyst removal whilst requiring relatively less number of rejuvenations.

The invention preferably requires that spirally wound layers of pleated fabric envelopes the non-pleated layers. The material of construction of the pleated layers could be different from the non-pleated layers or could be the same, but it is preferred that it is the same. Thus, the preferred aspects of the fabric used for making the pleated layer is similar to that used for making the non-pleated layer. i.e. the fabric may be made of natural fibres or material or may be of synthetic origin. Preferred fabric is non-woven. Preferred material of the fabric is synthetic preferably polymeric. Suitable polymeric materials of construction of the fabric are polyester, polypropylene or nylon. The average pore size of the pleated fabric is preferably in the range of 1 to 400 micrometers, more preferably in the range of 10 to 300 microns, most preferably in the range of 25 to 200 microns. The number of spiral windings of pleated layers is preferably in the range of 1 to 10, more preferably in the range of 1 to 5. The thickness of the pleated layer is preferably from 1 to 10 mm. The total external surface area of pleated layer which forms the outermost surface of the filter is preferably from 100 to 2500 cm$^2$ more preferably from 200 to 1500 cm$^2$.

The fabric of the antimicrobial membrane having ultrafiltration properties according to the invention is integrally skinned or impregnated with a composite comprising thermoplastic polymer and silver halide. The term 'integrally skinned' is generally used in literature to mean non-separable stacking of layers, i.e., potent against delamination.

Thermoplastic polymers are polymers that soften when exposed to heat and return to their original condition when cooled to room temperature. The preferred thermoplastic polymer is selected from polysulphones or polyvinylidenefluoride and all other standard material generally used for making ultrafiltration membrane.

The thermoplastic polymer impregnation may be on the both side of the fabric or may be on one side. It is preferable that the polymer impregnation is on one side. The membrane may be applied for instance in a filter of tubular or similar shape, for example if the membrane is spirally wound or tubular and pleated. Therefore, the impragnation preferably is at the inner surface.

It is further preferred that the filter comprises multiple layers of the non-pleated antimicrobial membrane of the invention.

In one of the most preferred embodiment there is provided a filter comprising a block of activated carbon comprises activated carbon particles bound together with a polymeric binder.

The antimicrobial membrane is preferably obtainable by the process according to the invention for making an antimicrobial membrane as described below. It is preferred that the carbon block is positioned at the core and is enveloped by spirally wound layer of non - pleated fabric and spirally wound layer of pleated fabric.

The carbon block optionally used in the filter of invention comprises activated carbon particles bound together with a polymeric binder. These activated carbon particles may be a modified one with positive zeta potential value. Activated carbon particles are preferably selected from one or more of bituminous coal, coconut shell, wood and petroleum tar. Surface area of the activated carbon particles preferably exceeds 500 m$^2$/g, more preferably exceeds 1000 m$^2$/g. Preferably, the activated carbon has size uniformity coefficient of less than 2, more preferably less than 1.5, Carbon Tetrachloride number exceeding 50%, more preferably exceeding 60%. The activated carbon preferably has an Iodine number greater than 800, more preferably greater than 1000.

The activated carbon particles are in the size range of 5 to 300 mesh, more preferably in the size range of 16 to 200 and most preferably in the size range of 30 to 200.

The activated carbon particles in carbon block are bonded to each other using a polymeric binder. Polymeric binders having a Melt Flow Rate (MFR) of less than 5 g/10 minutes are further more preferred. The binder material preferably has an MFR of less than 2 g/ 10 minutes, more preferably less than 1 g/ 10 minutes. Optimally the MFR is near zero. The melt-flow rate (MFR) is measured using ASTM D 1238 (ISO 1133) test where the tests are done at 190°C at 15 kg load.

The amount of polymer collected after a specific interval is weighed and normalized to the number of grams that would have been extruded in 10 minutes: melt flow rate is expressed in grams per reference time.

The binder is preferably a polymer. Suitable examples include ultra high molecular weight polymer preferably polyethylene, polypropylene and combinations thereof, which have these low MFR values. The molecular weight is preferably in the range of 106 to 109 g/mole. Binders of this class are commercially available under the trade names HOSTALEN from Tycona GMBH, GUR, Sunfine (from Asahi, Japan), Hizex (from Mitsubishi) and from Brasken Corp (Brazil). Other suitable binders include LDPE sold as Lupolen (from Basel Polyolefins) and LLDPE from Qunos (Australia).

Bulk density of the binder used as per the invention is preferably less than or equal to 0.6 g/cm3, more preferably less than or equal to 0.5 g/cm3, and further more preferably less than or equal to 0.25 g/cm3. The binder content can be measured by any known method and is preferably measured by Thermogravimetric analysis. The particle size of the polymeric binder is preferably in the range of 20 to 200 micrometers, more preferably in the range of 40 to 60 micrometers.

The weight ratio of polymeric binder to activated carbon particles is preferably in the range of 1:1 to 1:20, more preferably in the range of 1:2 to 1:10.

The carbon block is preferably in the shape of an annular cylinder, a dome, a hemisphere or a frustocone. The annular cylindrical shape is more preferred. It is preferred that the shortest path length across the carbon block i.e. the shortest distance from the inlet surface where the water enters the carbon block to the outlet surface where the water exits the carbon block is from 5 to 50 mm, more preferably 10 to 30 mm.

The carbon block is preferably prepared by a process which comprises the following steps:

(a) the particles of the activated carbon are mixed with the polymeric binder in the presence of water to prepare a moist mixture;
(b) the moist mixture is then added to a mould of desired size;
(c) the mould is then heated to a temperature in the range from 150°C to 350°C; and
(d) the mould is cooled and the carbon block is then demoulded.

Mixing of the activated carbon particles, the polymeric binder, and water is preferably done in vessels which include an agitator, mixer with dulled impeller blades, ribbon blender, rotary mixer, sigma mixer or any other low shear mixer that does not significantly alter the particle size distribution. The mixing is carried out to prepare a uniform mix. The mixing time is preferably from 0.5 to 30 minutes. Preferably, amount of water used in preparing the moist mixture is not more than 4 times the amount of particles, more preferably not more than 3 times the amount of particles. Optimally the amount of water used is from 0.5 to 1.5 times the weight of the carbon particles. The binder is then added to the above mixture and is further mixed. The most preferred mixer is sigma mixer.

The material in the mould before heating is preferably compacted. Compaction pressure may be from 0 to 15 kg/cm$^2$. Suitable compaction pressures are not more than 12 kg/cm$^2$, preferably from 3 to 10 kg/cm$^2$ and most preferably from 4 to 8 kg/cm$^2$. The pressure is preferably applied using either a hydraulic press or a pneumatic press, more preferably a hydraulic press.

The mould is usually made of aluminum, cast iron, steel or any material capable of withstanding temperatures exceeding 400°C. A mould release agent is preferably coated on the inside surface of the mould. The mould release agent is preferably selected from silicone oil or aluminum foil, or Teflon or any other commercially available mould release agent that has little or no adsorption onto the filter medium.

The mould is then heated to a temperature of 150°C to 350°C, preferably in the range of 200°C to 300°C. The mould is kept heated for more than 60 minutes, preferably 90 to 300 minutes. The mould is preferably heated in an oven using a non-convection, forced air or forced inert-gas convection oven.

The mould is then cooled and the moulded filter released from the mould.

The present invention also provides a process for making an antimicrobial membrane having ultrafiltration properties comprising the steps of:

a) preparing a solution of a silver salt in a suitable water miscible solvent having a water content less than 1 %,
b) adding a thermoplastic polymer to the solution of step (a),
c) coating the solution obtained after step (b) onto a fabric selected from cotton, polyester, polypropylene, polycotton, nylon or any other non-woven, woven or knitted fabric, and
d) exposing the polymer coated fabric to an aqueous solution of an alkali metal halide or alkaline earth metal halide.

It is preferable to have the process conditions such that the temperature during the process is not greater than 70°C and is substantially in the absence of Ultra-violet and visible light.

The silver salt used in the process is preferably selected from a water soluble salt of silver preferably silver nitrate, silver acetate. The salt selected for this purpose should also be soluble in the solvent used for dissolving the thermoplastic polymers.

The preferred thermoplastic polymer is selected from polysulphones, polyvinylidenefluoride and all other thermoplastic material generally used for making ultrafiltration membrane by phase separation technique.

The solvent used in the process of the present invention is preferably selected from N-methylpyrrolidone (NMP), dimethylformamide, dimethyl sulphoxide, dimethylacetamide, morpholine and mixtures thereof more preferably N-methylpyrrolidone, dimethylformamide and mixtures thereof. The solvent is preferably water miscible. It is preferable to use dry solvent where the water content in the solvent is less than 1%.

The polymer impregnated silver halide containing fabric is exposed to the aqueous solution of alkali halide preferably by means of dipping, spraying, brush-paint method or any other viable means more preferably by brush-paint method.

The alkali metal halide may be selected from sodium halide, potassium halide and other Group 1 metal halide of periodic table preferably potassium halide and the alkaline earth metal halide may be selected from any Group 2 metal halide of periodic table.

Now the invention will be demonstrated with the help of non-limiting examples. The examples are for illustration only and do not limit the scope of the invention in any manner.

**Examples:**

Example 1: Making of the antimicrobial membrane according to the invention:

To 100 ml of N-methylpyrrolidone (NMP) (Merck, 99.99%), 2g of silver nitrate (AgNO$_3$) was added and stirred well until AgNO$_3$ dissolved completely. The solution was covered with aluminum foil to avert any photolytic degradation of AgNO$_3$. To this solution 15g of polysulfone [PSf, Aldrich, Number average molecular weight =26,000; Tg (glass transition temperature) = 195°C] was added in parts with continuous stirring by using an overhead stirrer while keeping the solution temperature at about 70°C until a yellowish clear solution was obtained.

The pleated polyester fabric was kept horizontally on the table top and two ends were clipped properly. One of the surfaces of the fabric was coated with polymer solution [PSf: AgNO$_3$: NMP= 15:2:100] uniformly by brush-paint method. Similarly, the spiral fabric was also coated. The coated fabrics were then exposed to the 2% aqueous solution of potassium bromide away from exposure to direct sunlight. The coated fabric was left for 2 hours in a dark chamber. After 2 hours the coated fabric was taken and kept immersed overnight in deionized water containing about 500 mg/L of potassium bromide. Then the composite fabric was dried inside air-oven at 50-60°C.

Example 2: Making of the filter according to the invention:

Both ends of a pleated antimicrobial membrane having 45 pleats (each side of pleat is 10 mm) width of 5.7 cm and thickness of about 2 mm were sealed with polyethylene based Hot Melt Adhesive (HMA), to form a tubular pleated membrane. Same process was done for spiral antimicrobial membrane having width of 5.7 cm and thickness of about 2 mm. Then spiral fabric was wound over a perforated plastic tube having diameter of 3 cm and length 5.7 cm such that a total 6 number of spiral layers are incorporated resulting a length of 106 cm and then the open end of the fabric was sealed with polyethylene based HMA. This assembly was then covered with pleated antimicrobial membrane made above, such that the pleated and the spirally wound membranes are concentric. Then on a plastic plate of diameter 10 cm, polyethylene based HMA was poured starting from edge and up to the serration mark of about 2 mm thick in spiral manner and the composite assembly was fixed over it and allowed the HMA to cool for about 2-3 minutes under 2 kg pressure. Similarly the other end of the assembly was fixed with another similar piece of plastic. After cooling the filter was ready.

Example 3: Comparison of the filter with nano-silver (Prior art) and the filter according to the present invention in terms of silver leaching:

The leaching of silver particle (prior art) and silver halide (present invention) was monitored using standard Inductive Coupled Plasma Optical Emission Spectrometry (ICP-OES) known to the person skilled in the art.
The filter of the invention was made using the process described in the Example 1 and 2 using 15 % of polysulfone dissolved in 100 mL of NMP with 2% of silver nitrate and the filter with nano-silver was made using 15% of polysulfone dissolved in 100 mL of NMP with nano-silver (equivalent of 2 % of silver nitrate) by the same process described in example 1.
Then in 1st cycle 6 L de ionized water passed through both the filters and collected the water for silver analysis by ICP-OES. Then in 2nd cycle again 5 L of deionized water was passed through both the filters and after that the water was collected for analysis of silver. This process was repeated for another two times in the 3rd and 4th cycle wherein 5 L of water was passed in each cycle and then collected the water for analysis. In the 5th cycle 3.25 l of deionized water was passed and then measured the silver content by the same method.
The results of silver analysis are given below in Table 1

Table 1

| Number of cycle | Concentration of Silver (ppb) | |
|---|---|---|
| | Filter of the invention | Filter with nano-silver |
| 1st cycle | Below Detection Level | 745.1 |
| 2nd cycle | Below Detection Level | 142.3 |
| 3rd cycle | Below Detection Level | 36.9 |
| 4th cycle | 5.3 | 103.9 |
| 5th cycle | 6.0 | 107.5 |

From the above table it is evident that filter of the present invention leaches mush less silver than the filter made with nano-silver. This indicates that filter of the invention is having much higher life time than the filter of the prior art.

Example 4: Comparison of the filter with nano-silver (Prior art) and the filter according to the present invention in terms of silver leaching during phase separation by NIPS (Non solvent Induced Phase Separation) method:

Example number A and B in the following Table 2 were made using nano silver. After the application of the nano silver containing polysulfone dope (15 % of polysulfone dissolved in 100 mL of NMP with nano silver which is equivalent of 2 % of silver nitrate) on the suitable non-woven cloth, the cloth was exposed to deionized water. The coated fabric was left for 2 hours in a dark chamber. After 2 hours the coated fabric was taken and kept immersed overnight in deionized water. Then the composite fabric was dried inside air-oven at 50-60°C. After taking out the membrane silver content of the left over solution was measured using ICP-OES.
Example number C and D in the following Table 2 were made using the process of the present invention. After the application of the silver nitrate containing polysulfone dope (15 % of polysulfone dissolved in 100 mL of NMP with 2% of silver nitrate) on the suitable non-woven cloth, the cloth was exposed to potassium bromide solution (2% aqueous solution of potassium bromide). The coated fabric was left for 2 hours in a dark chamber. After 2 hours the coated fabric was taken and kept immersed overnight in deionized water containing about 500 mg/L of potassium bromide. Then the composite fabric was dried inside air-oven at 50-60°C. After taking out the membrane silver content of the left over solution was measured using ICP-OES.

Table 2

| Example Number | Type of silver Impregnation | Non-impregnated Silver (ppm) |
|---|---|---|
| 4A | Spiral Polyethylene fabric impregnated with polysulfone and nano silver | 23 |
| 4B | Pleated Polyethylene fabric impregnated with polysulfone and nano silver | 33 |
| 4C | Spiral Polyethylene fabric impregnated with polysulfone and silver halide according to the invention | <0.1 |
| 4D | Pleated Polyethylene fabric impregnated with polysulfone and silver halide according to the invention | <0.2 |

From the above it is evident that membrane made according the process of the present invention (example no. 4C and 4D) is superior in terms of silver retaining capabilities when compared to the example 4A and 4B.

Example 5: Comparison of the filter with nano-silver (Prior art) and the filter according to the present invention in terms of removal of *E.coli:*

The efficacy of removal of microorganism was compared between the filter with nano-silver (Prior art) and the filter according to the present invention. The filters were made according to the procedure explained above in the Examples. Certain quantity of test water containing *E.coli* ATCC 10536 (1 x $10^7$ cfu/100 mL) passed through both the filters as indicated in the Table 3 and then followed by measuring the amount of *E.coli* left in the water using standard Sterile MacConkey's Agar Medium for *E.coli.*

Table 3

| Samples | Log Reduction Value | |
|---|---|---|
| | Filter of the invention | Filter with nano-silver |
| Immediately after passing 4L of water | 4.12 | 3.58 |
| Immediately after passing 7L of water | 5.51 | 3.56 |

The above Table indicates that the removal of microorganisms for the filter of the invention is an improvement over the filter with nano silver or its performance is better.

Example 6: Elemental Analysis of Antimicrobial membrane:

The polyester - polysulfone - silver bromide composite antimicrobial membrane according to the invention prepared by the method described in Example 1 was used to conduct the elemental analysis of the membrane. The analysis was conducted using Energy dispersive X-ray spectroscopy combined with Scanning electron microscope (SEM-EDAX) from Hitachi-EMAX.

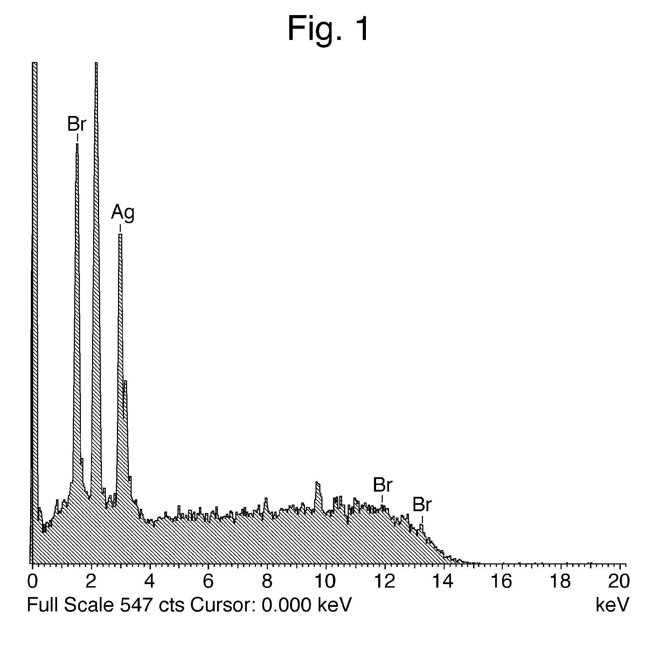

The composite membrane was first sputtered with gold to make it conducting and then put in the SEM-EDAX combined instrument (Hitachi- EMAX). The X - ray signal of the sample was analyzed by EDAX study to infer the presence of silver and bromine in the composite membrane sample. The spectrum is presented in Figure 1.

The EDAX spectrum, confirms the presence of silver (Ag, at 3.2-3.8 keV, relative intensity 0.869) and Bromine (Br, at 1.2-1.8 keV, relative intensity 0.643). The relative intensities indicate an Ag:Br mass ratio of 1.35:1.0, in excellent correspondence with the molar ratio of 1:1 expected for AgBr. This shows that there is in situ generation of Silver halide on the membrane prepared according to the invention.

**Description of Figure**

**Figure 1** shows the EDAX spectrum of a composite membrane sample as described in Example 6.

**Claims**

**1.** A process for making an antimicrobial membrane having ultrafiltration properties comprising the steps of:

a) preparing a solution of a water-soluble silver salt in a suitable water miscible solvent having a water content less than 1%;

b) adding a thermoplastic polymer to the solution of step (a);

c) coating the solution obtained after step (b) onto a fabric selected from cotton, polyester, polypropylene, polycotton, nylon or any other non-woven, woven or knitted fabric, and

d) exposing the polymer coated fabric to an aqueous solution of an alkali halide or alkaline earth metal halide.

2. A process as claimed in claim 1 wherein the solvent is selected from N-methylpyrrolidone, dimethyl sulphoxide, dimethylacetamide and mixtures thereof.

3. A process as claimed in claim 1 wherein the silver salt is selected from silver nitrate, silver acetate.

4. A process as claimed in any one of the preceding claims wherein temperature during the process is not greater than 70°C and is in the absence of ultra-violet and visible light.

5. An antimicrobial membrane having ultrafiltration properties comprising a fabric material integrally skinned with a composite comprising a thermoplastic polymer and silver halide, **characterised in that** the antimicrobial membrane is obtainable by the process as claimed in any one of claims 1 to 4.

6. An antimicrobial membrane having ultrafiltration properties as claimed in claim 5 wherein the fabric is selected from cotton, polyester, polypropylene, polycotton, nylon or any other non-woven, woven or knitted fabric.

7. An antimicrobial membrane having ultrafiltration properties as claimed in claim 5 wherein the polymer is selected from polysulfones or polyvinylidenefluoride.

8. A filter comprising an antimicrobial membrane as claimed in any one of the claims 5 to 7 in the form of a spirally wound layer of non - pleated fabric enveloped with spirally wound layer of pleated fabric, in a housing having an inlet and an outlet.

9. A filter as claimed in claim 8 further comprising a block of activated carbon comprising activated carbon particles bound together with a polymeric binder.

10. A filter as claimed in claim 9 wherein the carbon block is positioned at the core enveloped by the spirally wound layer of non - pleated fabric and spirally wound layer of pleated fabric.

11. A water purification device comprising an antimicrobial membrane as claimed in claims 5 to 7.

**Patentansprüche**

1. Verfahren zum Herstellen einer antimikrobiellen Membran mit Ultrafiltrationseigenschaften, das die folgenden Schritte aufweist:

a) Herstellen einer Lösung eines wasserlöslichen Silbersalzes in einem geeigneten, mit Wasser mischbaren Lösungsmittel, das einen Wassergehalt von weniger als 1 % aufweist;

b) Zugeben eines thermoplastischen Polymers zu der Lösung vom Schritt a);

c) Auftragen der nach dem Schritt b) erhaltenen Lösung auf ein Textilmaterial, das aus Baumwolle, Polyester, Polypropylen, Polycotton, Nylon oder irgendeinem anderen ungewebten, gewebten oder gewirkten Tuch ausgewählt ist; und

d) Aussetzen des mit Polymer überzogenen Textilmaterials einer wässrigen Lösung eines Alkalihalogenids oder Erdalkalimetallhalogenids.

2. Verfahren nach Anspruch 1, wobei das Lösungsmittel aus N-Methylpyrrolidon, Dimethylsulfoxid, Dimethylacetamid und Gemischen davon ausgewählt ist.

3. Verfahren nach Anspruch 1, wobei das Silbersalz aus Silbernitrat und Silberacetat ausgewählt ist.

**4.** Verfahren nach einem der vorstehenden Ansprüche,
wobei die Temperatur während des Verfahrens nicht höher als 70 °C ist und UV-Licht und sichtbares Licht nicht vorhanden sind.

**5.** Antimikrobielle Membran mit Ultrafiltrationseigenschaften,
die ein Textilmaterial aufweist, das vollständig mit einer Oberschicht aus einem Verbundmaterial versehen ist, das ein thermoplastisches Polymer und Silberhalogenid aufweist,
**dadurch gekennzeichnet, dass** die antimikrobielle Membran nach dem Verfahren nach einem der Ansprüche 1 bis 4 erhalten werden kann.

**6.** Antimikrobielle Membran mit Ultrafiltrationseigenschaften nach Anspruch 5, wobei das Textilmaterial aus Baumwolle, Polyester, Polypropylen, Polycotton, Nylon oder irgendeinem anderen ungewebten, gewebten oder gewirkten Tuch ausgewählt ist.

**7.** Antimikrobielle Membran mit Ultrafiltrationseigenschaften nach Anspruch 5, wobei das Polymer aus Polysulfonen oder Polyvinylidenfluorid ausgewählt ist.

**8.** Filter, der eine antimikrobielle Membran nach einem der Ansprüche 5 bis 7 in Form einer spiralförmig gewickelten Schicht aus fältchenfreiem Textilmaterial, das mit einer spiralförmig gewickelten Schicht aus Textilmaterial mit Fältchen umhüllt ist, in einem Gehäuse mit einem Einlass und einem Auslass aufweist.

**9.** Filter nach Anspruch 8,
der ferner einen Aktivkohleblock aufweist, der Aktivkohleteilchen aufweist, die mit einem polymeren Bindemittel miteinander verbunden sind.

**10.** Filter nach Anspruch 9,
wobei der Kohleblock am Kern angeordnet ist, der mit der spiralförmig gewickelten Schicht aus fältchenfreiem Textilmaterial und der spiralförmig gewickelten Schicht aus Textilmaterial mit Fältchen umhüllt ist.

**11.** Wasserreinigungsvorrichtung,
die eine antimikrobielle Membran nach den Ansprüchen 5 bis 7 aufweist.

**Revendications**

**1.** Procédé pour produire une membrane antimicrobienne ayant des propriétés d'ultrafiltration comprenant les étapes de :

a) préparation d'une solution d'un sel d'argent soluble dans l'eau dans un solvant miscible à l'eau approprié ayant une teneur en eau inférieure à 1 % ;
b) addition d'un polymère thermoplastique à la solution de l'étape (a) ;
c) application de la solution obtenue après l'étape (b) en revêtement sur une étoffe choisie parmi le coton, le polyester, le polypropylène, le polycoton, le nylon ou toute autre étoffe non tissée, tissée ou tricotée, et
d) exposition de l'étoffe revêtue de polymère à une solution aqueuse d'un halogénure alcalin ou d'un halogénure de métal alcalino-terreux.

**2.** Procédé selon la revendication 1 où le solvant est choisi parmi la N-méthylpyrrolidone, le diméthylsulfoxyde, le diméthylacétamide et leurs mélanges.

**3.** Procédé selon la revendication 1 où le sel d'argent est choisi parmi le nitrate d'argent, l'acétate d'argent.

**4.** Procédé selon l'une quelconque des revendications précédentes où la température pendant le procédé n'est pas supérieure à 70°C et est en l'absence de lumière ultraviolette et visible.

**5.** Membrane antimicrobienne ayant des propriétés d'ultrafiltration comprenant un matériau de type étoffe intégralement revêtu d'un composite comprenant un polymère thermoplastique et un halogénure d'argent, **caractérisée en ce que** la membrane antimicrobienne peut être obtenue par le procédé selon l'une quelconque des revendications 1 à 4.

**6.** Membrane antimicrobienne ayant des propriétés d'ultrafiltration selon la revendication 5 où l'étoffe est choisie parmi le coton, le polyester, le polypropylène, le polycoton, le nylon ou toute autre étoffe non tissée, tissée ou tricotée.

**7.** Membrane antimicrobienne ayant des propriétés d'ultrafiltration selon la revendication 5 où le polymère est choisi parmi les polysulfones et le poly(fluorure de vinylidène).

**8.** Filtre comprenant une membrane antimicrobienne selon l'une quelconque des revendications 5 à 7 sous forme d'une couche enroulée en spirale d'étoffe non plissée enveloppée avec une couche enroulée en spirale d'étoffe plissée, dans un boîtier ayant une entrée et une sortie.

**9.** Filtre selon la revendication 8 comprenant en outre un bloc de carbone activé comprenant des particules de carbone activé liées entre elles avec un liant polymérique.

**10.** Filtre selon la revendication 9 où le bloc de carbone est positionné au niveau du noyau enveloppé par la couche enroulée en spirale d'étoffe non plissée et la couche enroulée en spirale d'étoffe plissée.

**11.** Dispositif d'épuration de l'eau comprenant une membrane antimicrobienne selon les revendications 5 à 7.

# Fig. 1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9818330 A
- JP 2006348966 A
- US 5102547 A, Waite Warren A
- WO 2009047154 A
- US 6716895 B1, Terry, Richard N.

**Non-patent literature cited in the description**

- **HU, W. et al.** In situ synthesis of silver chloride nanoparticles into bacterial cellulosemembranes. *MATERIALS SCIENCE AND ENGINEERING C,* 05 May 2009, vol. 29 (4), 1216-12191